# EUROPÄISCHE PATENTANMELDUNG

(11) **EP 3 006 765 A1**
(43) Veröffentlichungstag der Anmeldung: **13.04.2016**
(21) Anmeldenummer: 15002560.9
(22) Anmeldetag: 31.08.2015
(51) Int. Cl.: F16F 1/38

(54) **ELASTOMERLAGER ALS BUCHSENLAGER**

(30) Priorität: 09.09.2014 DE 102014013077
(71) Anmelder: Jörn GmbH, 71336 Waiblingen (DE)
(72) Erfinder: Mursinsky, Jörg, 71522 Backnang (DE)
(74) Vertreter: Liebl, Thomas

(57) **Zusammenfassung**

Die Erfindung betrifft ein Elastomerlager als Buchsenlager mit einem Aufnahmeauge (2) mit einem zylindrisch geschlossenen Aufnahmeraum (3) als erstem Lagerteil, und mit einer in den Aufnahmeraum (3) axial eingepressten Elastomer-Metall-Buchse (4), bestehend aus einem formstabilen Innenzylinderteil (5) als zweitem Lagerteil und einer radial äußeren, zylindrischen Außenbuchse (6) mit einem zwischen dem Innenzylinderteil (5) und der Außenbuchse (6) angeordneten und damit verbundenen Elastomerringteil (7). Erfindungsgemäß sind in der zylindrischen Außenbuchse (6) einander zugeordnete, jeweils in einer Querschnittebene und über einen Teil des Umfangs der Außenbuchse (6) verlaufende Querschlitze (10, 10', 12, 12', 16, 16', 18, 18', 20, 20') angebracht, wobei jeweils zwei zugeordnete parallele Querschlitze einen Zwischenschlitzbereich als Buchsenausschnitt (11, 13, 15, 17, 19, 23) der Außenbuchse (6) sowie des darunter liegenden Elastomerringteils (7) begrenzen, wobei im eingepressten Zustand der Buchsenausschnitt (11, 13, 15) mit einem, größeren Außendurchmesser als der übrige Innendurchmesser des Aufnahmeraums (3) in einer zugeordneten Innennut (14) des Aufnahmeraums (3) einliegt und sich dort beidseitig axial als Axialsicherung abstützt und/oder die Außenbuchse (6) axial länger als der Aufnahmeraum (3) ist und sich im eingepressten Zustand axial beidseitig an den Buchsenausschnitt (17, 19, 23) anschließende, weniger radial komprimierte Außenblechbereiche mit einem größeren Außendurchmesser als der Aufnahmeraum jeweils stirnseitig am Aufnahmeraum (3) als Abstützbereiche (21, 21', 22, 22', 25, 25') zur Axialsicherung abstützen.

## Beschreibung

Die Erfindung betrifft ein Elastomerlager als Buchsenlager nach dem Oberbegriff des Anspruchs 1.

Ein allgemein bekanntes Elastomerlager als Buchsenlager besteht aus einem Aufnahmeauge mit einem zylindrisch geschlossenen Aufnahmeraum als erstem Lagerteil und einer in den Aufnahmeraum axial eingepressten Elastomer-Metall-Buchse. Diese besteht aus einem formstabilen Innenzylinderteil, zum Beispiel aus einem Stahlrohrabschnitt als zweitem Lagerteil und einer radial äußeren, zylindrischen Außenbuchse, die konkret als Außenblechbuchse ausgeführt ist, mit einem zwischen dem Innenzylinderteil und der Außenbuchse angeordneten und damit verbundenen Elastomerringteil als einvulkanisiertes Gummielement.

Im nicht eingepressten Zustand entsprechend einem Herstellzustand ist der Außendurchmesser der Elastomer-Metall-Buchse bzw. der Außendurchmesser der Außenbuchse größer als der Innendurchmesser des Aufnahmeraums. Beim axialen Einpressen in den Aufnahmeraum wird der Außendurchmesser der Elastomer-Metall-Buchse durch radiale Kompression und Vorspannung des Elastomerringteils und der Außenbuchse auf den kleineren Innendurchmesser des Aufnahmeauges für eine dortige, radial nach außen vorgespannte Anlage reduziert.

Weiter ist ein ähnliches Elastomerlager als Buchsenlager mit einer axial eingepressten Elastomer-Metall-Buchse als sogenannte Schlitzbuchse bekannt (zum Beispiel DE 195 53 08 A1), bei der die Außenbuchse einen durchgehenden axialen Längsschlitz aufweist, der sich zum Teil in das Elastomerringteil und durch eine dort gegebenenfalls enthaltene Zwischenblechbuchse erstreckt. Beim Einpressen einer solchen Elastomer-Metall-Buchse in ein Aufnahmeauge wird dann bei der Verkleinerung des Außendurchmessers dieser Längsschlitz zumindest teilweise geschlossen.

Die bei einem solchen Elastomerbuchsenlager beim Einpressen in der Elastomer-Metall-Buchse aufgebaute Vorspannung soll so groß sein, dass diese ortsfest und unverdrehbar durch Kraftschluss im Aufnahmeauge gehalten und fixiert wird. Falls ein solches Elastomerlager nur bei Radial- und/oder Torsionsbelastungen eingesetzt wird, besteht nur eine geringe Gefahr, dass die Elastomer-Metall-Buchse axial aus dem Aufnahmeraum des Aufnahmeauges auswandert. Je nach den Einbau- und Einsatzgegebenheiten, insbesondere bei zusätzlichen wechselnden Axialbelastungen und kardanischen Belastungen kann es aber erforderlich sein, die eingepresste Elastomer-Metall-Buchse gegen ein axiales Auswandern zu sichern, wobei jedoch ein Oberflächenschutz nicht beschädigt werden darf. Eine bekannt einfache, jedoch aufwendige Art einer Sicherung gegen ein axiales Auswandern besteht darin, ein solches Elastomerlager mit der Elastomer-Metall-Buchse zwischen zwei Stützplatten eines Lagerbocks einzuspannen.

Aufgabe der Erfindung ist es, ein gattungsgemäßes Elastomerlager mit einer funktionsfähigen Sicherung gegen ein axiales Auswandern auszurüsten, bei der insbesondere auch ein Oberflächenschutz nicht beschädigt wird.

Diese Aufgabe wird dadurch gelöst,
Gemäß Anspruch 1 ist ein Elastomerlager als Buchsenlager vorgesehen, mit einem Aufnahmeauge mit einem zylindrisch geschlossenen Aufnahmeraum als erstem Lagerteil, und mit einer in den Aufnahmeraum axial eingepressten Elastomer-"Metall"-Buchse, die ein formstabiles, zum Beispiel aus Metall gebildetes, Innenzylinderteil als zweites Lagerteil und eine radial äußere, zylindrische Außenbuchse, vorzugsweise eine Außenblechbuchse, mit einem zwischen dem Innenzylinderteil und der Außenbuchse angeordneten und damit verbundenen Elastomerringteil aufweist, wobei im nicht eingepressten Zustand entsprechend einem Herstellzustand der Außendurchmesser der Elastomer-Metall-Buchse entsprechend dem Außendurchmesser der Außenbuchse größer als der Innendurchmesser des Aufnahmeraums ist und dieser Außendurchmesser beim axialen Einpressen in den Aufnahmeraum durch radiale Kompression und Vorspannung des Elastomerringteils auf den kleineren Innendurchmesser des Aufnahmeraums für eine dortige, radial nach außen vorgespannte Anlage reduzierbar ist bzw. reduziert wird. Erfindungsgemäß ist vorgesehen, dass in der zylindrischen Außenbuchse gegenüberliegende, einander zugeordnete, jeweils in einer bezüglich der Zylinderaxialrichtung querliegenden Querschnittebene und über einen Teil des Umfangs verlaufende Querschlitze angebracht sind. Jeweils zwei zugeordnete parallele Querschlitze begrenzen einen Zwischenschlitzbereich als Buchsenausschnitt der Außenbuchse sowie des darunter liegenden Elastomerringbereichs. Damit sind zwei mit entsprechenden Maßnahmen und gegebenenfalls kombinierbare axiale Sicherungen realisierbar:

Im ersten Fall entsprechend einer ersten Ausführung weist der Aufnahmeraum an seiner Innenseite eine Vertiefung als Innennut auf, die im eingepressten Zustand der Elastomer-Metall-Buchse im Bereich des Buchsenausschnitts liegt. Dieser wölbt sich dann nach dem Einpressen der Elastomer-Metall-Buchse als Rückfederbereich mit seinem Außen blech durch den im vorgespannten Elastomermaterial aufgebauten Elastomerdruck und/oder durch eine Radialspannung des Außenblechbereichs in die Innennut auf und stützt sich dort beidseitig axial als Axialsicherung ab.

Im anderen Fall entsprechend einer zweiten Ausführung ist die Außenbuchse axial länger als der Aufnahmeraum, welcher die axiale Länge des zugeordneten Buchsenausschnitts aufweist. Im eingepressten Zustand sind dann die jeweils axial seitlich an den Buchsenausschnitt anschließenden Außenblechbereiche durch den Elastomerdruck und/oder durch eine Radialspannung des Außenblechbereichs über den Innendurchmesser des Aufnahmeraums aufgeweitet und können sich dort jeweils stirnseitig am Aufnahmeraum axial als Abstützbereiche zur Axialsicherung abstützen. Beim Einpressen wird ein Abstützbereich komprimiert und federt nach dem Einpressen wieder zurück, wobei der Einpressvorgang bis zur Anlage des gegenüberliegenden Abstützbereichs am Aufnahmeraum geführt wird.

Damit wird bei beiden gegebenenfalls kombinierbaren Axialsicherungen eine gut Axialabstützfunktion insbesondere durch Außenblechkanten der Querschlitze erhalten, wobei ein am Lager angebrachter an sich üblicher Oberflächenschutz durch die Axialsicherung nicht beschädigt wird. Zudem kann die erfindungsgemäße Axialsicherung einfach und kostengünstig realisiert werden. Diese Axialsicherung kann unter anderem vorteilhaft mit einer Schlitzbuchse als Blattfederaugenlager in Blattfedern aus Faserverbundwerkstoffen verwendet werden.

Der Begriff "Metall" in der Begrifflichkeit "Elastomer-Metall-Buchse" steht hier und nachfolgend nicht nur für metallische Werkstoffe, sondern stellt ausdrücklich ein Synonym für sämtliche anderen hinsichtlich der metallischen Werkstoffeigenschaften bzw. Steifigkeit vergleichbaren Werkstoffe dar, wie zum Beispiel für Kunststoffe, die eine, einem metallischen Werkstoff vergleichbare Steifigkeit aufweisen, wie dies, um nur ein Beispiel zu nennen, zum Beispiel insbesondere bei Duroplasten bzw. Duromeren und/oder faserverstärkten Kunststoffen der Fall ist.

Die Außenbuchse ist bevorzugt zum Beispiel aus einem Blechmaterial gebildet und bildet eine Außenblechbuchse aus, kann jedoch grundsätzlich auch aus jedem anderen geeigneten Material, zum Beispiel einem Kunststoffmaterial (im Sinne einer Außenkunststoffbuchse), ausgebildet sein, das einem Blechmaterial und/oder zur Umsetzung der erfindungsgemäßen Lösung vergleichbare bzw. erforderliche Verformungs- und/oder Steifigkeits- und/oder Werkstoffeigenschaften aufweist.

Grundsätzlich kann die erfindungsgemäße Axialsicherung bei unterschiedlichen Zylinderformen des Lagers verwendet werden. In üblicher Weise sollen insbesondere auch aus Kostengründen der Aufnahmeraum, die Außenbuchse und der Außenumfang des Innenzylinderteils kreiszylindrisch ausgebildet werden. Das Aufnahmeauge mit seinem kreiszylindrischen Aufnahmeraum kann dabei in an sich bekannter Weise ein weiter zu befestigendes Ringteil, oder bereits ein Funktionsteil, beispielsweise ein Lenkerelement mit einem Aufnahmeraum sein, in den die Elastomer-Metall-Buchse eingepresst wird. Ähnlich kann das Innenzylinderteil als Innenrohr oder gegebenenfalls auch bereits als Funktionselement ausgebildet sein.

In einer konkreten bevorzugten Ausführungsform begrenzen jeweils zwei, parallel verlaufende, gleich lange Querschlitze einen Buchsenausschnitt, wobei grundsätzlich zwischen diesen Begrenzungsquerschlitzen auch weitere Schlitze angeordnet sein könnten. Je nach den Gegebenheiten kann bereits eine erfindungsgemäße Axialsicherung ausreichen oder es sind mehrere, insbesondere zwei radial gegenüberliegende Axialsicherungen erforderlich.

Die Länge der Querschlitze entsprechend der Umfangslänge eines Buchsenausschnitts ist so zu dimensionieren, dass sowohl die Lagerfunktion als auch die Funktion der Axialsicherung erreicht wird. Geeignet ist dazu eine Länge der Querschlitze zwischen 1/10 und 1/4 des Außenbuchsen-Umfangs vorzugweise ca. 1/8 des Außenbuchsen-Umfangs.

Bei der Ausführungsform, bei der ein Buchsenausschnitt im eingepressten Zustand in einer Ausnehmung als Innennut des Aufnahmeraums einliegt, kann die Innennut mit Vorteilen bei der Herstellung und bei der Montage umlaufend ausgeführt sein. Um sicherzustellen, dass sich der Buchsenausschnitt in der Einpressvorrichtung nicht so verformt, dass er sich partiell über die Außenbuchse schiebt, soll die Wandstärke der Außenbuchse größer als die Umformtiefe des Buchsenausschnitts sein.

Je nach der individuellen Ausgestaltung eines Elastomerlagers entsprechend der ersten Ausführung variiert der nach radial außen gerichtete Elastomerdruck im eingepressten Zustand zur Ausformung eines Buchsenausschnitts hinein in eine Innennut. Insbesondere bei weniger vorgespannten Buchsen und/oder größeren Wandstärken der Außenbuchse sind mit insgesamt gerade verlaufenden, parallelen Querschlitzen zur Ausbildung eines Buchsenausschnitts gegebenenfalls zu geringe Ausformungen für einen ausreichenden Eingriff in die Innennut möglich. Eine größere, ausreichende Ausformung kann realisiert werden, wenn die beiden Enden eines Buchsenausschnitts tailliert ausgeführt werden, wodurch sich das Widerstandsmoment für die Ausformung bei gleichem Elastomerdruck reduziert.

Bei einer weiteren Variante der ersten Ausführung eines Elastomerlagers, welche ebenfalls für Buchsen mit geringer Vorspannung und/oder großen Wandstärken der Außenbuchse vorteilhaft einsetzbar ist, wird die Ausformung des Buchsenausschnitts bereits am Herstellteil gebildet, insbesondere bei einem Vulkanisierprozess durch den Elastomer- bzw. Gummidruck beim Einspritzvorgang. Beim Einpressen wird ein so bereits vorab ausgeformter Buchsenausschnitt radial elastisch zurückgedrückt und schnappt in seiner Endstellung durch radiale Ausdehnung in die Innennut des Aufnahmeraums ein.

Bei der ersten Ausführung mit der Innennut wird eine gute und ausreichende Abstützfunkton erreicht, wenn der aufgewölbte und einliegende Buchsenausschnitt mit einer relativ geringen axialen Erstreckung etwa in der axialen Buchsenmitte liegt.

Bei der anderen Ausführung der axialen Sicherung, bei der sich jeweils axial an den Buchsenausschnitt anschließend, radial aufgeweitet Außenblechbereiche stirnseitig am Aufnahmeraum abstützen, sollen dagegen die einander zugeordneten begrenzenden Querschlitze jeweils relativ nahe an der axialen Außenseite der Außenbuchse liegen.

In einer besonders bevorzugten Ausführungsform ist die Elastomer-Metall-Buchse als sogenannte Schlitzbuchse ausgebildet mit einem durchgehenden axialen Längsschlitz in der Außenbuchse, wobei sich der Längsschlitz im Herstellzustand mit bestimmter Schlitzbreite zumindest zum Teil in das Elastomerringteil und durch eine dort gegebenenfalls enthaltene Zwischenblechbuchse erstreckt. Im eingepressten Zustand ist der Durchmesser der Außenbuchse unter zumindest teilweiser Schließung des Längsschlitzes reduziert. Die Vorteile bei der Verwendung einer solchen Schlitzbuchse sind allgemein bekannt und liegen insbesondere in einem Aufbau einer gleichmäßigen Elastomervorspannung und in einem einfach handhabbaren Einpressvorgang.

Bei der Verwendung einer Schlitzbuchse können die einen Buchsenausschnitt begrenzenden Querschlitze über den Längsschlitzbereichen hinweg und durch den Längsschlitz geteilt sein, vorzugsweise etwa in Querschlitzmitte geteilt sein. Dadurch ergeben sich zungenförmig zugeordnete, durch den Längsschlitz geteilte, Buchsenausschnitte. Durch diese Teilung können sich die Buchsenausschnitte zur Ausbildung der axialen Sicherung besonders einfach aufwölben und aufweiten. Gegebenenfalls können solche Axialsicherungen im Längsschlitzbereich auch mit Axialsicherungen kombiniert werden, die beabstandet zum Längsschlitzbereich liegen.

Anhand einer Zeichnung werden Ausführungsbeispiele der erfindungsgemäßen Lagerausführung weiter erläutert:

Es zeigen:
- Fig. 1 bis 3: eine erste Lagerausführung mit innerhalb eines Aufnahmeraums vorgesehenen axialen Sicherungen in unterschiedlichen Ansichten;
- Fig. 4 bis 6: eine Ausführungsform entsprechend der Figuren 1 bis 3 mit einem taillierten Buchsenausschnitt;
- Fig. 7 bis 10: eine Ausführungsform entsprechend der Figuren 1 bis 3 mit einem im Herstellteil vorab ausgeformten Buchsenausschnitt;
- Fig. 11 bis 13: eine Ausführungsform entsprechend der Figuren 1 bis 3 mit versetzter Anordnung einer axialen Sicherung;
- Fig. 14 bis 16: eine zweite Lagerausführung mit axial äußerer axialer Sicherung an einem Aufnahmeauge in unterschiedlichen Ansichten; und
- Fig. 17 bis 19: eine Ausführungsform entsprechend den Fig. 14 bis 16 mit einer dagegen versetzt liegenden axialen Sicherung.

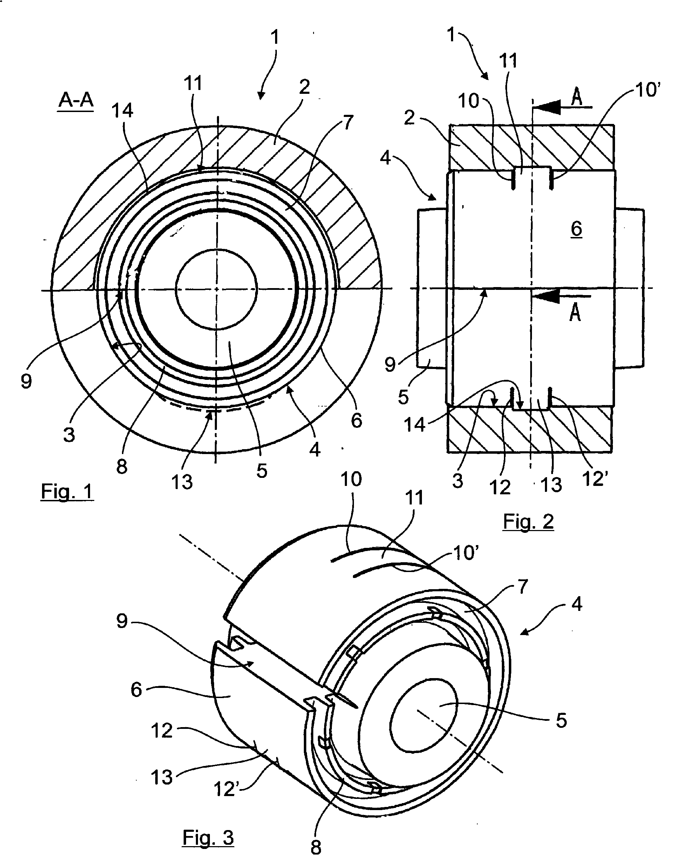

In den Figuren 1 und 2 ist ein Elastomerlager 1 dargestellt mit einem Aufnahmeauge 2 mit einem kreiszylindrischen Aufnahmeraum 3 als erstem Lagerteil und einer in den Aufnahmeraum 3 axial eingepressten Elastomer-Metall-Buchse 4. In Fig. 3 ist die Elastomer-Metall-Buchse 4 in perspektivischer Ansicht im Herstellzustand, das heißt im noch nicht eingepressten Zustand gezeigt. Wie insbesondere aus Fig. 3 ersichtlich, ist die Elastomer-Metall-Buchse 4 als Schlitzbuchse ausgebildet mit einem Innenzylinderteil 5 als Metallrohrabschnitt (der Rohrabschnitt kann auch aus jedem anderen geeigneten Material hergestellt sein) und einer äußeren zylindrischen Außenbuchse 6, die vorzugsweise eine Außenblechbuchse auch einem Blechmaterial ist, sowie einem zwischen dem Innenzylinderteil 5 und der Außenbuchse 6 angeordnetem Elastomerringteil 7 (der vorzugsweise aber nicht notwendig ein einvulkanisierter Gummikörper ist), in dem eine Zwischenblechbuchse 8 enthalten ist. Die Außenbuchse 6 weist zudem im Herstellzustand nach Fig. 3 einen Längsschlitz 9 mit bestimmter Schlitzbereite auf, der sich keilförmig auch in das Elastomerringteil 7 und durch die Zwischenblechbuchse 8 erstreckt.

Die Fig. 1 und 2 zeigen in einer teilweise geschnittenen Axialansicht (Fig. 1) und einer teilweise geschnittenen Seitenansicht (Fig. 2) das bereits montierte Elastomerlager 1 mit der bereits in das Aufnahmeauge 2 eingepressten Elastomer-Metall-Buchse 4. Beim Einpressvorgang wurde der im Herstellzustand größere Außendurchmesser der Elastomer-Metall-Buchse 4 unter Aufbringung einer Vorspannung im Elastomermaterial reduziert und der Längsschlitz 9 geschlossen, wobei die Lage des geschlossenen Längsschlitzes 9 eingezeichnet ist.

Der prinzipielle Grundaufbau des Elastomerlagers 1 ist bei allen Darstellungen in den Fig. 1 bis 19 gleich, sodass die bisher eingeführten Bezugszeichen für gleiche Teile weiterverwendet werden.

Bei axialem Einpressen der Elastomer-Metall-Buchse 4 in den Aufnahmeraum 3 erfolgt eine radiale Kompression. Erfindungsgemäß ist, wie aus Fig. 3 ersichtlich durch zwei parallele Querschlitze 10, 10' ein erster Buchsenausschnitt 11 und durch Querschlitze 12, 12' radial gegenüberliegend ein weiterer Buchsenausschnitt 13 jeweils seitlich begrenzt. Die axial seitliche Begrenzung der Buchsenausschnitte 11, 13 ist jeweils durch die zugeordneten Querschlitze 10, 10' und 12, 12' gegeben. Die Begrenzung der Buchsenausschnitte 11 und 13 in Umfangsrichtung ist durch die jeweiligen Länge der parallelen und gleich langen Querschlitze 10, 10' und 12, 12' vorgegeben, wobei diese Querschlitzlänge hier etwa 1/8 des Außenbuchsen-Umfangs entspricht. Die Buchsenausschnitte 11, 13 liegen mit einer im Vergleich zur axialen Länge der Außenbuchse 6 geringen axialen Erstreckung in der axialen Buchsenmitte. Die Querschlitzbreite soll möglichst gering sein, was beispielweise mit einem Stanzverfahren und einer Abscherung zu erreichen ist.

Das Aufnahmeauge 2 weist in der axialen Mitte im Aufnahmeraum 3 eine umlaufende Innennut 14 auf, die in ihrer axialen Breite der axialen Breite der Buchsenausschnitte 11, 13 entspricht. Wie aus den Fig. 1 und 2 ersichtlich hat sich nach dem Einpressen der Elastomer-Metall-Buchse 4 der Buchsenausschnitt 11 und 13 als Rückfederbereich durch die Vorspannung und den Druck im Elastomermaterial sowie durch eine radiale Vorspannung des Außenblechbereichs in die Innennut 14 hinein ausgewölbt und stützt sich damit als axiale Sicherung an den Rändern der Innennut 14 ab.

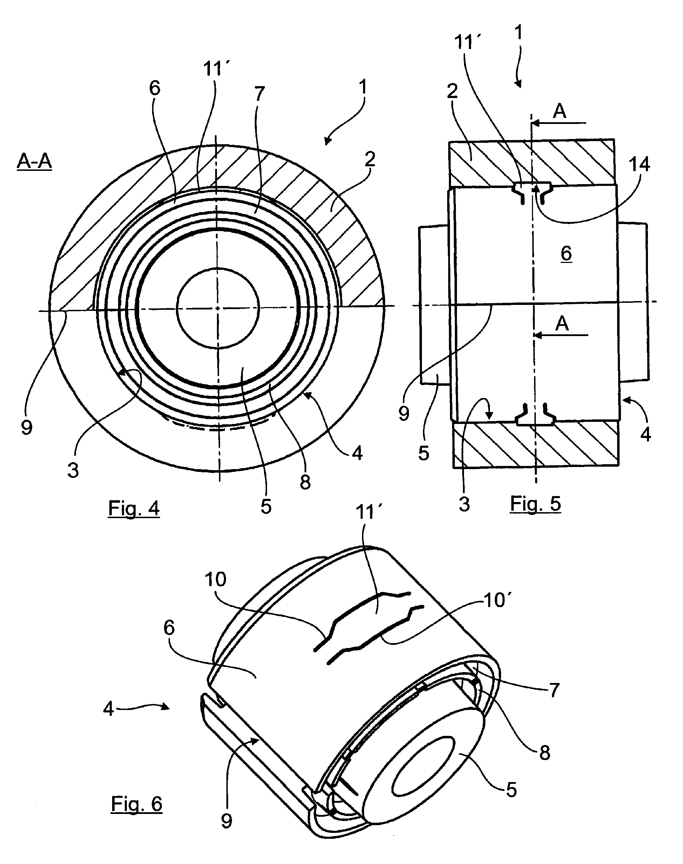

In den Fig. 4 bis 6 und den Fig. 7 bis 10 sind zwei weitere, weitgehend gleiche Ausführungsformen des Elastomerlagers entsprechend der Fig. 1 bis 3 dargestellt, sodass im Folgenden nur die unterschiedliche Ausbildung der axialen Sicherung erläutert wird:
Die Ausführungsform nach den Fig. 4 bis 6 unterscheidet sich vom Elastomerlager 1 nach den Fig. 1 bis 3 durch die Gestalt des Buchsenausschnitts 11', der hier an beiden Enden tailliert ausgebildet ist, das heißt dass die sonst parallel gerade verlaufenden Querschlitze 10, 10' an beiden Endbereichen auseinander laufen, so dass der Buchsenausschnitt 11' im Vergleich zu den Endbereichen eine geringere Breite aufweist. Dadurch wird bei gleichem radial nach außen gerichtetem Elastomerdruck ein vergleichsweise geringeres Widerstandsmoment für die radiale Ausformung des Buchsenausschnitts 11' erreicht.

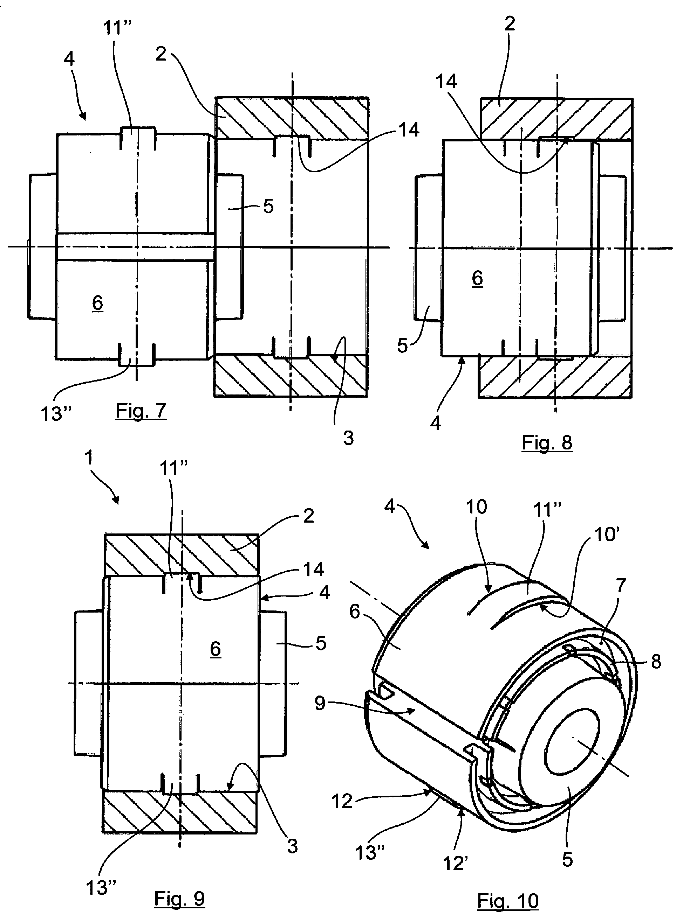

Die Ausführungsform nach den Fig. 7 bis 10 unterscheidet sich vom Elastomerlager 1 nach den Fig. 1 bis 3 dadurch, dass die Buchsenausschnitte 11" und 13" als Rückfederbereiche bereits am Herstellteil (Fig. 10) der Elastomer-Metall-Buchse 4 ausgeformt sind und den Außenblechdurchmesser mit einem Überstand etwas geringer als die Materialstärke der Außenbuchse 6 überragen. In Fig. 7 ist das Herstellteil 4 unmittelbar vor dem Einpressen dargestellt. Aus Fig. 8 ist ersichtlich, dass beim Einpressen die Buchsenausschnitte 11" und 13" elastisch radial zurück gedrückt werden und in der fertig montierten Endlage nach Fig. 9 in die Innennut 14 des Aufnahmeauges 2 durch radiale Ausdehnung einschnappen.

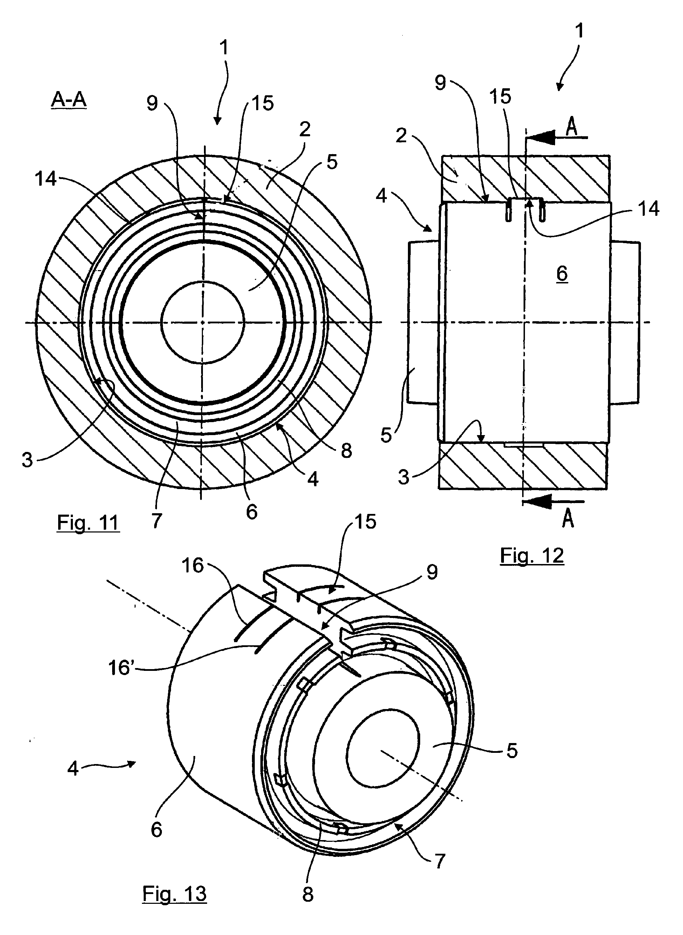

Wie aus Fig. 13 ersichtlich ist hier nur ein Buchsenausschnitt 15 (mit gleicher Mittenlage und Breite wie in Fig. 3) durch Querschlitze 16, 16' begrenzt. Die Querschlitze 16, 16' verlaufen hier jedoch über den Bereich des Längsschlitzes 9 hinweg, sodass der Buchsenausschnitt 15 axial längsgeteilt ist. Wie aus den Fig. 4 und 5 zu ersehen, ist auch hier im eingepressten Zustand der Elastomer-Metall-Buchse 4 der Längsschlitz 9 geschlossen, wobei die Längsteilung des Buchsenausschnitts 15 in zwei zungenförmige Teilbereiche die Auswölbung nach dem Einpressen in die Innennut 14 und damit die Ausbildung einer axialen Sicherung unterstützen kann.

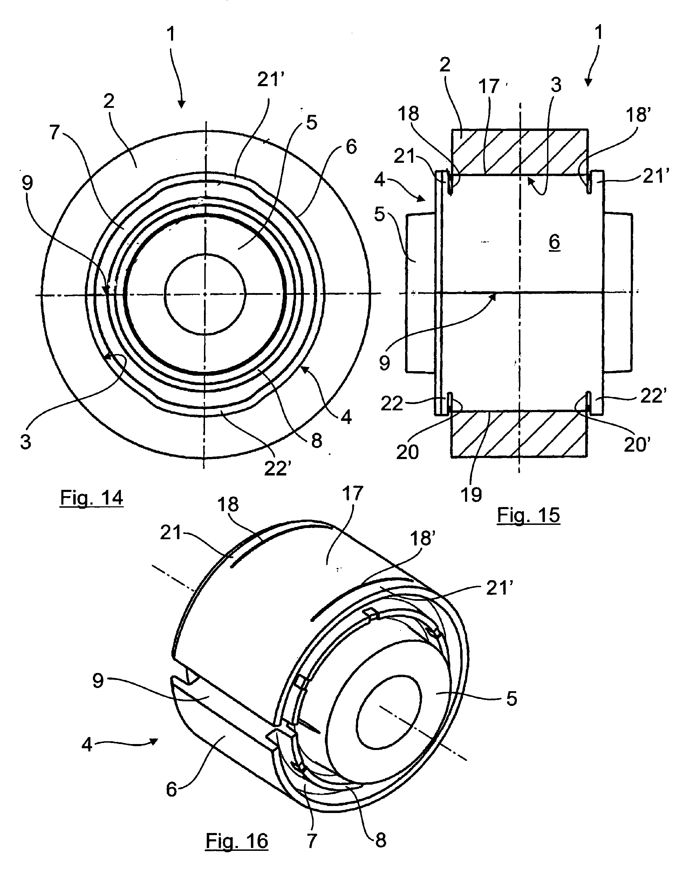

Bei der Ausführungsform des elastischen Lagers nach den Fig. 1 bis 3 und der modifizierten Ausführungsform nach den Fig. 11 bis 13 liegt die axiale Sicherung mittig innerhalb des Aufnahmeauges 2 bzw. des Aufnahmeraums 3. Die Ausführungsform des elastischen Lagers 1 nach den Fig. 14 bis 16 ist demgegenüber weitgehend ähnlich aufgebaut, wobei jedoch die axiale Sicherung an beiden axialen Stirnseiten des Aufnahmeauges 2 realisiert ist:
Dazu ist auch hier, wie aus dem Herstellteil der Elastomer-Metall-Buchse 4 nach Fig. 16 ersichtlich ein Buchsenausschnitt 17 von zwei gegenüberliegenden Querschlitzen 18, 18' begrenzt, wobei radial gegenüberliegend ein weiterer Buchsenausschnitt 19 entsprechend durch Querschlitze 20, 20' begrenzt ist.

Aus den Fig. 14 und 15 des fertig montierten Elastomerlagers 1 mit bereits eingepresster Elastomer-Metall-Buchse 4 ist ersichtlich, dass hier die Außenbuchse 6 axial länger als der Aufnahmeraum 3 des Aufnahmeauges 2 ist, welches in seiner axialen Länge der axialen Länge der Buchsenausschnitte 17 und 19 entspricht. Die Buchsenausschnitte 17 und 19 sind daher radial auf den Durchmesser des Aufnahmeraums 3 bei geschlossenem Längsschlitz 9 komprimiert. Die jeweils seitlich daran anschließenden Bereiche sind als axiale Abstützbereiche 21, 21' und 22, 22' durch den Elastomerdruck und/oder die Rückstellkraft des Außenrohres radial gegenüber dem Einbauzustand aufgeweitet und stützen sich als Axialsicherung jeweils stirnseitig am Aufnahmeraum 3 ab, wobei nur ein Abstützbereich durch den Aufnahmeraum 3 durchgepresst wird.

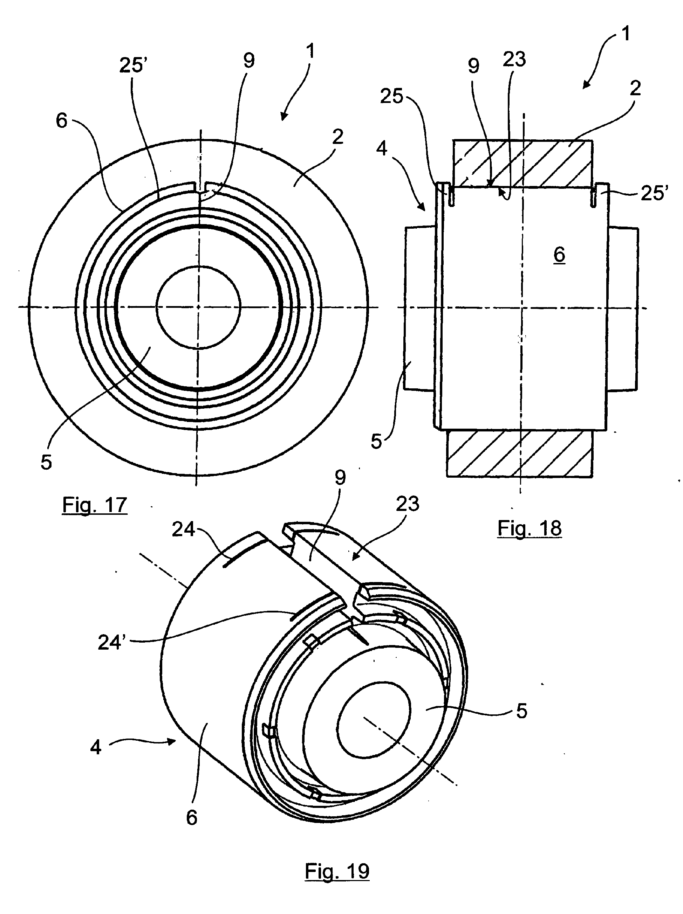

In den Fig. 17 bis 19 ist eine weitere Ausführungsform eines Elastomerlagers 1 dargestellt, das im Wesentlichen der Ausführungsform nach den Fig. 7 bis 9 entspricht, mit dem Unterschied, dass nur eine axiale Sicherung vorgesehen ist und die einen Buchsenausschnitt 23 begrenzenden Querschlitze 24, 24' durch den Längsschlitz 9 (siehe Fig. 19) in ihrer Länge geteilt sind (ähnlich Fig. 13). In den Fig. 17 und 18 ist die Lage des durch die radiale Kompression beim Einpressvorgang (nahezu) geschlossenen Längsschlitzes 9 eingezeichnet, wodurch auch der Buchsenausschnitt 23 (nahezu) geschlossen ist. Ähnlich wie bei den Fig. 14 und 15 sind hier seitliche Abstützbereiche 25, 25' aufgeweitet, welche sich als axiale Sicherungen jeweils stirnseitig mit größerem Durchmesser als der Aufnahmeraum 3 stirnseitig am Aufnahmeauge 2 abstützen.

## Patentansprüche

1. Elastomerlager als Buchsenlager, mit einem Aufnahmeauge (2) mit einem zylindrisch geschlossenen Aufnahmeraum (3) als erstem Lagerteil, und mit einer in den Aufnahmeraum (3) axial eingepressten Elastomer-Metall-Buchse (4), die ein formstabiles Innenzylinderteil (5) als zweites Lagerteil und eine radial äußere, zylindrische Außenbuchse (6), vorzugsweise eine Außenblechbuchse, mit einem zwischen dem Innenzylinderteil (5) und der Außenbuchse (6) angeordneten und damit verbundenen Elastomerringteil (7) aufweist, wobei im nicht eingepressten Zustand entsprechend einem Herstellzustand der Außendurchmesser der Elastomer-Metall-Buchse (4) entsprechend dem Außendurchmesser der Außenbuchse (6) größer als der Innendurchmesser des Aufnahmeraums (3) ist und dieser Außendurchmesser beim axialen Einpressen in den Aufnahmeraum (3) durch radiale Kompression und Vorspannung des Elastomerringteils (7) auf den kleineren Innendurchmesser des Aufnahmeraums (3) für eine dortige, radial nach außen vorgespannte Anlage reduziert wird,
**dadurch gekennzeichnet,**
**dass** in der zylindrischen Außenbuchse (6) einander zugeordnete, jeweils in einer bezüglich der Zylinderaxialrichtung querliegenden Querschnittebene und über einen Teil des Umfangs der Außenbuchse (6) verlaufende Querschlitze (10, 10', 12, 12', 16, 16', 18, 18', 20, 20') angebracht sind, wobei jeweils zwei zugeordnete parallele Querschlitze einen Zwischenschlitzbereich als Buchsenausschnitt (11, 13, 11', 11", 13", 15, 17, 19, 23) der Außenbuchse (6) sowie des darunter liegenden Elastomerringteils (7) begrenzen, und
**dass** im eingepressten Zustand der Buchsenausschnitt (11, 13, 11', 11", 13", 15) mit einem größeren Außendurchmesser als der übrige Innendurchmesser des Aufnahmeraums (3) in einer zugeordneten Innennut (14) des Aufnahmeraums (3) einliegt und sich dort beidseitig axial als Axialsicherung abstützt und/oder
**dass** die Außenbuchse (6) axial länger als der Aufnahmeraum (3) ist, der die axiale Länge des Buchsenausschnitts (17, 19, 23) aufweist und sich im eingepressten Zustand axial beidseitig an den Buchsenausschnitt (17, 19, 23) anschließende, weniger radial komprimierte Außenblechbereiche mit einem größeren Außendurchmesser als der Innendurchmesser des Aufnahmeraums jeweils stirnseitig am Aufnahmeraum (3) als Abstützbereiche (21, 21', 22, 22', 25, 25') axial zur Axialsicherung abstützen.

2. Elastomerlager nach Anspruch 1, **dadurch gekennzeichnet, dass** der Aufnahmeraum (3), die Außenbuchse (6) und der Außenumfang des Innenzylinderteils (5) kreiszylindrisch ausgebildet sind.

3. Elastomerlager nach Anspruch 1 oder 2, **dadurch gekennzeichnet, dass** jeweils zwei, parallel verlaufende, gleich lange Querschlitze (10, 10', 12, 12', 16, 16', 18, 18', 20, 20', 24, 24') einen Buchsenausschnitt (11, 13, 11', 11", 13", 15, 17, 19, 23) begrenzen und ein oder mehrere Buchsenausschnitte (11, 13, 11', 11", 13", 15, 17, 19, 23) zur Ausbildung von Axialsicherungen vorgesehen sind.

4. Elastomerlager nach einem der Ansprüche 1 bis 3, **dadurch gekennzeichnet, dass** die Länge der Querschlitze (10, 10', 12, 12', 16, 16', 18, 18', 20, 20', 24, 24') entsprechend der zugeordneten Umfangslänge eines Buchsenausschnitts (11, 13, 11', 11 ", 13", 15, 17, 19, 23) zwischen 1/10 und 1/4, vorzugsweise bei ca. 1/8 des Außenbuchsen-Umfangs liegt.

5. Elastomerlager nach einem der Ansprüche 1 bis 4, **dadurch gekennzeichnet, dass** bei der Ausführung, bei der wenigstens ein Buchsenausschnitt (11, 13, 15) im eingepressten Zustand in einer zugeordneten Innennut (14) des Aufnahmeauges (3) einliegt, die Wandstärke der Außenbuchse (6) größer als die Umformtiefe des Buchsenausschnitts (11, 13, 11', 11 ", 13", 15) in eine vorzugsweise umlaufende Innennut (14) ist.

6. Elastomerlager nach einem der Ansprüche 1 bis 5, **dadurch gekennzeichnet, dass** bei der Ausführung, bei der wenigstens ein Buchsenausschnitt im eingepressten Zustand in einer zugeordneten Innennut (14) des Aufnahmeauges (3) einliegt, die beiden Enden des Buchsenausschnitts (11') tailliert sind.

7. Elastomerlager nach einem der Ansprüche 1 bis 6, **dadurch gekennzeichnet, dass** bei der Ausführung, bei der wenigstens ein Buchsenausschnitt (11", 13") im eingepressten Zustand in einer zugeordneten Innennut (14) des Aufnahmeauges (3) einliegt, der Buchsenausschnitt (11", 13") als stegförmiger Rückfederbereich bei einer nicht eingepressten Elastomer-Metall-Buchse (4) radial über den Außendurchmesser der Außenbuchse (6) durch Ausformung bei der Herstellung mit radial darunter liegendem Elastomermaterial, insbesondere bei einem Vulkanisationsprozess durch den Elastomerdruck beim Einspritzvorgang vorsteht, wobei beim Einpressen der Elastomer-Metall-Buchse (4) in den Aufnahmeraum (4) der Buchsenausschnitt (11", 13") radial elastisch zurückgedrückt und vorgespannt wird und in seiner Solllage in die Innennut (14) des Aufnahmeraums (3) einschnappt.

8. Elastomerlager nach einem der Ansprüche 1 bis 7, **dadurch gekennzeichnet, dass** bei der Ausführung, bei der wenigstens ein Buchsenausschnitt (11, 13, 15) im eingepressten Zustand in einer zugeordneten Innennut (14) des Aufnahmeraums (3) einliegt und sich dort axial abstützt, der durch die Querschlitze (10, 10', 12, 12', 16, 16') begrenzte Buchsenausschnitt (11, 13, 15) mit einer im Vergleich zur axialen Länge der Außenbuchse (6) geringen axialen Erstreckung in der axialen Buchsenmitte liegt.

9. Elastomerlager nach einem der Ansprüche 1 bis 8, **dadurch gekennzeichnet, dass** bei der Ausführung, bei der sich jeweils axial seitlich an den Buchsenausschnitt (17, 19, 23) anschließende, radial aufgeweitete Außenblechbereiche als Abstützbereiche (21, 21', 22, 22', 25, 25') stirnseitig am Aufnahmeraum (3) axial abstützen, die einander zugeordneten, begrenzenden Querschlitze (18, 18', 20, 20', 24, 24') jeweils relativ nahe an der axialen Außenseite der Außenbuchse (6) liegen.

10. Elastomerlager nach einem der Ansprüche 1 bis 9, **dadurch gekennzeichnet, dass** die Elastomer-Metall-Buchse (4) eine sogenannte Schlitzbuchse ist, mit einem durchgehenden axialen Längsschlitz (9) mit bestimmter Schlitzbreite in der Außenbuchse (6), wobei sich der Längsschlitz im Herstellzustand zumindest zum Teil in das Elastomerringteil (7) und durch eine dort gegebenenfalls enthaltene Zwischenblechbuchse (8) erstreckt, und
dass im eingepressten Zustand der Durchmesser der Außenbuchse (6) unter zumindest teilweiser Schließung des Längsschlitzes (9) reduziert ist.

11. Elastomerlager nach Anspruch 10, **dadurch gekennzeichnet, dass** die einen Buchsenausschnitt (15, 23) begrenzenden Querschlitze (16, 16', 24, 24') über den Längsschlitz (9) hinweg geführt und durch den Längsschlitz (9) geteilt, vorzugsweise etwa in Querschlitzmitte geteilt sind, so dass sich zungenförmig zugeordnete, durch den Längsschlitz (9) geteilte Buchsenausschnitte (16, 16', 24, 24') ergeben.
